# EUROPÄISCHE PATENTSCHRIFT

(11) **EP 3 254 822 B1**
(45) Veröffentlichungstag und Bekanntmachung des Hinweises auf die Patenterteilung: **20.11.2019**
(21) Anmeldenummer: 17173821.4
(22) Anmeldetag: 31.05.2017
(51) Int. Cl.: B29C 45/14, B65D 1/26, B65D 25/36

(54) **BEHÄLTER MIT ETIKETT SOWIE VERFAHREN ZU DESSEN HERSTELLUNG**
CONTAINER WITH LABEL AND METHOD FOR THE PRODUCTION THEREOF
RÉCIPIENT COMPRENANT UNE ÉTIQUETTE ET SON PROCÉDÉ DE FABRICATION

(30) Priorität: 08.06.2016 DE 102016110581
(43) Veröffentlichungstag der Anmeldung: 13.12.2017
(73) Patentinhaber: Sanner GmbH, 64625 Bensheim (DE)
(72) Erfinder: SCHNEIDER, Matthias, 55262 Heidesheim (DE)
(74) Vertreter: Reiser & Partner Patentanwälte mbB

(56) Entgegenhaltungen:
- WO-A1-2009/062632
- WO-A1-2015/074909
- JP-A- 2002 225 828
- JP-A- 2003 011 181
- JP-A- 2008 056 311
- JP-A- 2012 012 099
- US-A1- 2008 241 441

## Beschreibung

Die vorliegende Erfindung betrifft einen Behälter mit einem Behälterkörper aus Kunststoff, wobei der Behälterkörper eine Seitenwandung und einen Behälterboden aufweist, wobei der Behälterboden eine Innenseite und eine Außenseite aufweist, wobei der Behälterkörper im Bereich der Seitenwandung mit einem Etikett versehen ist, wobei der Behälterkörper ein Spritzgussteil aus Kunststoff ist, das unter Verwendung einer Spritzgussform hergestellt ist, wobei der Behälterkörper und das Etikett dadurch verbunden sind, dass bei der Herstellung des Behälterkörpers das Etikett in die Spritzgussform eingelegt wurde und daran anschließend der Kunststoff in die Spritzgussform eingespritzt wurde. Die Erfindung betrifft darüber hinaus ein Verfahren zur Herstellung eines Behälters mit einem Behälterkörper aus Kunststoff, wobei der Behälterkörper eine Seitenwandung und einen Behälterboden aufweist, wobei der Behälterboden eine Innenseite und eine Außenseite aufweist, wobei der Behälterkörper im Bereich der Seitenwandung mit einem Etikett versehen wird, wobei der Behälterkörper ein Spritzgussteil aus Kunststoff ist, das unter Verwendung einer Spritzgussform hergestellt wird, wobei der Behälterkörper und das Etikett dadurch verbunden werden, dass bei der Herstellung des Behälterkörpers das Etikett in die Spritzgussform eingelegt und daran anschließend der Kunststoff in die Spritzgussform eingespritzt wird.

Die Herstellung eines Behälters, bei dem ein Etikett in eine Spritzgussform eingelegt und daran anschließend der Kunststoff in die Spritzgussform eingespritzt wird, ist auch als In-Mold-Verfahren oder In-Mold-Labeling bekannt. Vorteil dieses Verfahrens ist, dass das Etikett vorab hergestellt werden kann, z.B. im Wege des Druckes. Dies ermöglicht eine vielseitige und ansprechende Gestaltung des Etikettes. Das Etikett kann aber auch eine technische Funktion erfüllen und beispielsweise zur Gasdichtigkeit beitragen.

Die Herstellung von Behältern im In-Mold-Verfahren weist besondere Probleme auf. Insbesondere ist der Einspritzvorgang so zu gestalten, dass das Kunststoffmaterial das in die Spritzgussform eingelegte Etikett nicht verschiebt und kein Kunststoffmaterial an die Außenseite des Etikettes gelangt. Die Probleme bei der Herstellung treten dann verstärkt auf, wenn die Behälter klein sind.

Das In-Mold-Labeling von Behältern ist beispielsweise aus der DE 10 2005 037 274 A1 bekannt, die einen zylindrischen Behälter beschreibt, der durch ein In-Mold-Verfahren hergestellt ist. Die DE 10 2005 037 274 A1 befasst sich dabei damit, dass die Herstellung von zylindrischen Formteilen mit kleinem Durchmesser durch In-Mold-Labeling Probleme mit sich bringt. Die DE 10 2005 037 274 A1 versucht dem abzuhelfen, indem ein Formwerkzeug eingesetzt wird, das zwischen einer Mantelfläche und einer Grundfläche eines Formraums einen Radius von höchstens 3,0 mm aufweist.

Ein weiterer Behälter der im In-Mold-Verfahren hergestellt ist, geht aus der WO 2009/062632 A1 hervor. Hier ist vorgesehen, dass am Außenrand eines Behälterbodens eine Konusform anschließt, deren größerer Durchmesser über einen radialen Flansch im Bereich der bodenseitigen Stirnkante mit der Innenfläche des Behälters verbunden ist. Hierdurch soll der flüssige Kunststoff beim Spritzgießen über den Konus in den radialen Flansch fließen, wo er auf das Etikett trifft.

Die JP 2008056311A beschreibt einen tassenförmigen Behälter, dessen Seitenwandung mit einem Etikett versehen ist.

Ein weiterer Behälter aus Kunststoff mit einem In-Mold-Label ist in der DE 10 2013 112 945 A1 beschrieben.

Die JP 2012 012099A beschreibt einen Behälter, der im In-Mold-Verfahren hergestellt ist. Bei einer der beschriebenen Ausführungsformen ist im Bereich der Seitenwandung am unteren Ende des Etiketts ein abgerundeter Absatz vorgesehen. Zudem sind an der Innenseite des Behälters konkave Bereiche ausgebildet.

Die WO2015/074909 A1 beschreibt einen weiteren Behälter mit hinterspritztem Etikett und ein Verfahren zu dessen Herstellung.

Die Erfindung stellt sich die Aufgabe, einen Behälter mit einem Etikett anzugeben, der einfach und in hoher Qualität hergestellt werden kann. Zudem stellt sich die Erfindung die Aufgabe, ein Verfahren zur Herstellung eines solchen Behälters anzugeben.

Die Aufgabe wird bei einem Behälter mit den Merkmalen von Anspruch 1 gelöst. Demnach ist bei einem eingangs genannten Behälter vorgesehen, dass der Behälterboden einen ersten Abschnitt aufweist, der auf der Innenseite konkav und auf der Außenseite konkav ist. Diese bi-konkave Gestaltung ermöglicht eine hohe Qualität des Behälters. Insbesondere trägt sie dazu bei, dass Probleme bei der Herstellung des Behälters im Wege des Spritzgießens vermieden werden. Es hat sich gezeigt, dass bei einer solchen Gestaltung des Behälterbodens mit dem ersten Abschnitt, der auf beiden Seiten konkav ausgebildet ist, das Risiko reduziert wird, dass sich das Etikett während des Spritzgießens in unerwünschter Weise verschiebt. Zudem wird die Gefahr, dass Kunststoffmaterial auf die Außenseite des Etikettes gelangt, verringert. Daher ist es mit der beanspruchten Merkmalskombination möglich, Behälter im Wege des In-Mold-Labelings mit einer hohen Prozesssicherheit herzustellen. Insbesondere können auf die beschriebene Weise auch vergleichsweise kleine Behälter zuverlässig hergestellt werden. Die Ausschussrate sowie der Aufwand für die Kontrolle der Produkte kann erheblich reduziert werden. Daher ermöglicht die beanspruchte Gestaltung auch eine Senkung der Herstellungskosten. Zudem ermöglicht die beanspruchte Gestaltung, dass der Behälter besonders einfach in eine

Öffnung, wie sie insbesondere bei einem Verkaufstray vorgesehen sein kann, eingesetzt werden kann.

Bei einem Verfahren wird die Aufgabe mit den Merkmalen von Anspruch 10 gelöst. Demnach ist bei einem eingangs genannten Verfahren vorgesehen, dass der Behälterboden einen ersten Abschnitt aufweist, der auf der Innenseite konkav und auf der Außenseite konkav ist.

Nachfolgend werden vorteilhafte Ausgestaltungen der Erfindung beschrieben. Die jeweiligen Merkmale beziehen sich dabei sowohl auf den Behälter als auch das Verfahren zu dessen Herstellung.

In bevorzugter Weise ist der erste Abschnitt dadurch auf der Innenseite konkav, dass er eine erste konkave Kontur mit wenigstens einem ersten Krümmungsradius mit einem ersten Krümmungsmittelpunkt oberhalb des Behälterbodens aufweist, und dadurch auf der Außenseite konkav, dass er einen zweite konkave Kontur mit einem zweiten Krümmungsradius mit wenigstens einem zweiten Krümmungsmittelpunkt unterhalb des Behälterbodens aufweist. Insbesondere kann ein Querschnitt durch den Mittelpunkt des Behälterbodens in einem Abschnitt die erste und die zweite konkave Kontur aufweisen. Vorzugsweise ist der Behälterboden dabei rotationssymmetrisch ausgebildet. Vorzugsweise liegt die erste konkave Kontur der zweiten konkaven Kontur unmittelbar gegenüber. Der erste Abschnitt kann so ausgebildet sein, dass der erste Krümmungsradius und der zweite Krümmungsradius über die Breite des ersten Abschnittes in radialer Richtung konstant sind. Es ist aber auch möglich, dass sich der Krümmungsradius über die Breite des ersten Abschnittes in radialer Richtung ändert. Insbesondere kann der Krümmungsradius von der Mitte zu den Rändern des ersten Abschnittes hin zunehmen.

Vorzugsweise beträgt ein Winkel, den eine gedachte gerade Verbindungslinie zwischen den beiden Endpunkten der zweiten konkaven Kontur zu der Behälterlängsachse einnimmt, zwischen 45° und 85°. Besonders bevorzugt beträgt der vorgenannte Winkel zwischen 60° und 70°. Die Endpunkte der zweiten konkaven Kontur sind die Punkte, an denen die konkave Kontur in eine konvexe (oder gegebenenfalls auch gerade) Kontur übergeht.

Nach einer bevorzugten Ausgestaltung ist vorgesehen, dass der Behälterboden Abschnitte aufweist, die entlang einer Freiformlinie angeordnet sind. Es hat sich in der Praxis gezeigt, dass diese Gestaltung zu einem besseren Füllverhalten der Spritzgussform beiträgt. Die Sicherheit des Prozesses kann verbessert werden und das Risiko, dass beim Spritzgussvorgang flüssiger Kunststoff auf die Außenseite des Etikettes gelangt, wird weiter reduziert. Eine Freiformlinie bezeichnet dabei eine Linie mit sich stetig ändernder Tangentensteigung. Vorzugsweise ist im ersten Abschnitt eine Oberflächenkontur vorgesehen, die eine Freiformfläche bildet.

Eine bevorzugte Ausgestaltung sieht vor, dass in dem ersten Bereich keine geraden Flächen vorgesehen sind.

Erfindungsgemäß ist vorgesehen, dass der Behälterboden einen zweiten Abschnitt aufweist, der auf der Innenseite konkav und auf der Außenseite konvex ist. Vorzugsweise schließt der zweite Abschnitt sich an den ersten Abschnitt an. Hierdurch wird unter anderem die Zuverlässigkeit bei der Herstellung weiter verbessert.

Erfindungsgemäß ist vorgesehen, dass der zweite Abschnitt in radialer Richtung weiter außen als der erste Abschnitt angeordnet ist. Insbesondere kann der zweite Abschnitt weiter von einer Längsmittelachse des z.B. rohrförmigen Behälters entfernt sein als der erste Abschnitt.

Eine besonders vorteilhafte Ausgestaltung sieht vor, dass eine minimale Wanddicke in dem ersten Abschnitt zwischen 20% und 80% einer minimalen Wanddicke des zweiten Abschnitts beträgt. Vorzugsweise liegt die minimale Wanddicke des ersten Abschnitts zwischen 30% und 60% der minimalen Wanddicke des zweiten Abschnitts. Diese Merkmale tragen zu einer besonders einfachen und zuverlässigen Herstellung bei. Die Wanddicke an einem Punkt des Behälterbodens bestimmt sich auf dem kürzesten Weg zwischen der Innenfläche und der Außenfläche des Behälterbodens.

Eine weitere Verbesserung sieht vor, dass der Behälterboden einen Verbindungsabschnitt aufweist, der mit der Seitenwandung verbunden ist. Vorzugsweise schließt sich der Verbindungsabschnitt an den zweiten Abschnitt an.

Eine weitere bevorzugte Ausgestaltung sieht vor, dass ein behälterbodenseitiges Ende der Seitenwandung von einer Unterseite des Behälterbodens um den Abstand A beabstandet ist. Auch dies trägt zu einer zuverlässigen Herstellung bei. Vorzugsweise liegt der Abstand A zwischen 60% und 200% der Wanddicke der Seitenwandung. In besonders bevorzugter Weise liegt der Abstand A zwischen 80% und 150% der Wanddicke der Seitenwandung.

Eine vorteilhafte Ausgestaltung der Erfindung sieht vor, dass der Verbindungsabschnitt einen Bereich aufweist, der sich in einer axialen Längsrichtung des Behälters erstreckt.

In vorteilhafter Weise kann vorgesehen sein, dass sich an den ersten Abschnitt in radialer Richtung nach innen ein mittlerer Abschnitt des Behälterbodens anschließt. Vorzugsweise ist der mittlere Abschnitt senkrecht zu einer axialen Längsrichtung des Behälters angeordnet. Weiterhin kann vorgesehen sein, dass der mittlere Abschnitt an seiner Innenseite und Außenseite von parallelen Oberflächen begrenzt ist.

Vorzugsweise beträgt eine minimale Wanddicke des Behälterbodens in dem ersten Abschnitt zwischen 20% und 70% (vorzugsweise zwischen 30% und 60%) einer minimalen Wanddicke des mittleren Abschnitts. Die Wanddicke an einem Punkt des Behälterbodens bestimmt sich auf kürzestem Weg zwischen Innenfläche und Außenfläche des Behälterbodens.

Eine besonders bevorzugte Ausgestaltung der Erfindung sieht vor, dass eine Unterseite des mittleren Abschnitts von einer Unterseite des Behälterbodens mit einem Abstand B beabstandet ist. Der Abstand B wird dabei in einer axialen Längsrichtung des Behälterkörpers gemessen. Vorzugsweise liegt der Abstand B zwischen dem 0,5-Fachen und 1,8-Fachen der Wanddicke der Seitenwandung. Besonders bevorzugt liegt der Abstand B zwischen dem 0,8-Fachen und dem 2-Fachen von Abstand A. In bevorzugter Weise liegt der Abstand B zwischen dem 1,0-Fachen und dem 4-Fachen der minimalen Wanddicke in dem Bereich des ersten Abschnitts.

Eine bevorzugte Ausführung sieht vor, dass ein Absatz zwischen der Außenseite der Seitenwandung und dem Verbindungsabschnitt ausgebildet ist, wobei die Seitenwandung einen Außendurchmesser aufweist, der über einem maximalen Außendurchmesser des Verbindungsabschnittes liegt. Insbesondere springt die Seitenwandung an dem Absatz nach außen vor. Zudem ist bevorzugt, wenn der Absatz umlaufend ausgebildet ist. Ein solcher Absatz trägt zu einer sicheren Herstellung bei, da er zu einer genauen und zuverlässigen Positionierung des Labels in der Spritzgussform beiträgt.

Vorzugsweise verläuft die Innenseite der Seitenwandung bis zu dem Absatz parallel zu der Außenseite der Seitenwandung.

Eine vorteilhafte Ausgestaltung sieht vor, dass der Behälter röhrenförmig ausgebildet ist. Insbesondere kann der Behälter zylinderförmig ausgebildet sein.

Vorzugsweise ist das Etikett zylindrisch oder teilzylindrisch ausgebildet.

Eine bevorzugte Ausgestaltung sieht vor, dass das Etikett die Seitenwandung umschließt.

Weiterhin ist bevorzugt, wenn der Behälter eine Behälteröffnung aufweist. Vorzugsweise weist der Behälter einen Behälterverschluss zum Verschließen der Behälteröffnung auf.

Vorzugsweise ist das Etikett bedruckt.

Weiterhin ist bevorzugt, wenn das Etikett an der Außenseite der Seitenwandung angeordnet ist.

Vorzugsweise deckt das Etikett wenigstens 50%, vorzugsweise wenigstens 80% einer Außenfläche der Seitenwandung ab. Besonders bevorzugt ist, wenn das Etikett die Seitenwandung vollständig abdeckt.

Eine bevorzugte Ausgestaltung sieht vor, dass ein Anspritzpunkt in dem mittleren Abschnitt angeordnet ist. An den Anspritzpunkt wird bei dem Spritzgießen der flüssige Kunststoff in die Spritzgussform eingespritzt.

Vorzugsweise sind der Behälterboden und die Seitenwandung als ein zusammenhängendes Spritzgussteil ausgebildet. Insbesondere sind sie in einem einzigen Einspritzvorgang in derselben Spritzgussform hergestellt.

Vorzugsweise beträgt der Außendurchmesser des Behälterkörpers im Bereich der Seitenwandung weniger als 50mm. Besonders bevorzugt ist, wenn der vorgenannte Außendurchmesser bei weniger als 40mm liegt.

Weitere Ziele, Merkmale, Vorteile und Anwendungsmöglichkeiten der vorliegenden Erfindung ergeben sich aus der nachfolgenden Beschreibung von Ausführungsbeispielen anhand der Zeichnung. Dabei bilden alle beschriebenen und/oder bildlich dargestellten Merkmale für sich oder in beliebiger sinnvoller Kombination den Gegenstand der Erfindung, auch unabhängig von der Zusammenfassung in einzelnen Ansprüchen oder deren Rückbeziehungen.

Es zeigen:
- Fig. 1:: Eine perspektivische Darstellung eines erfindungsgemäßen Behälters;
- Fig. 2:: Eine Seitenansicht des Behälters aus Fig. 1;
- Fig. 3:: Einen Längsschnitt durch den Behälter aus Fig. 1;
- Fig. 4:: Ein vergrößertes Detail des Behälters aus Fig. 3;
- Fig. 5:: Einen Längsschnitt durch einen Behälter nach einer weiteren Ausführungsform;
- Fig. 6:: Ein vergrößertes Detail des Behälters aus Fig. 5;

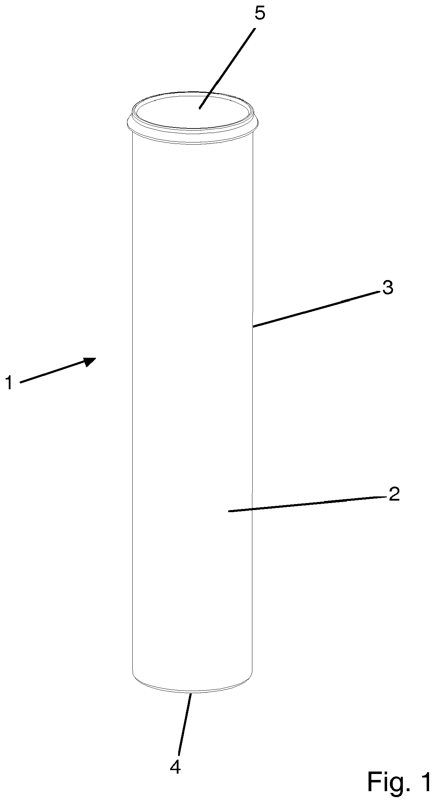

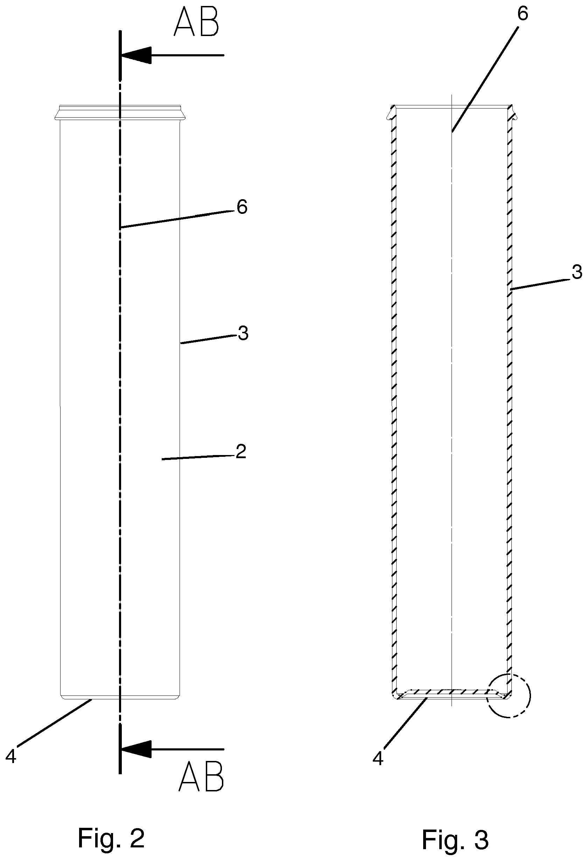

Die Figuren 1 bis 3 zeigen einen erfindungsgemäßen Behälter 1, der einen Behälterkörper 2 aus Kunststoff aufweist. Der Behälterkörper 2 weist dabei eine Seitenwandung 3 und einen Behälterboden 4 auf. Im dargestellten Ausführungsbeispiel ist der Behälterkörper 2 rohrförmig ausgebildet und hat eine zylindrische Form. Die Unterseite des Behälterbodens 4 ist als eine Standfläche ausgebildet. Der Behälterkörper 2 weist auf der dem Behälterboden 4 gegenüberliegenden Seite eine Behälteröffnung 5 auf. Diese kann durch einen nicht dargestellten Behälterverschluss verschlossen werden. Der Behälterverschluss kann insbesondere als Stopfen ausgebildet sein. Der Aufbau des Behälters 1 ist in Figur 3 besonders gut zu erkennen, die einen Längsschnitt entlang der in Figur 2 angegebenen Linie darstellt. Der dargestellte Behälter 1 ist rotationssymmetrisch ausgebildet. Der Behälter 1 weist eine Behälterlängsachse 6 auf. Die Seitenwandung 3 wird durch eine zylindrische Innenfläche und eine zylindrische Außenfläche begrenzt.

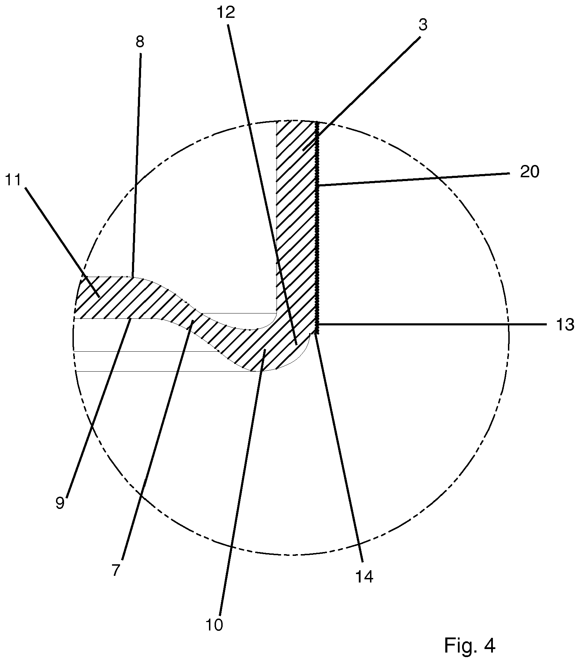

Der Behälter 1 ist ein Spritzgussteil aus Kunststoff, das unter Verwendung einer Spritzgussform hergestellt ist. Der Behälterkörper 2 ist mit einem Etikett 20 versehen, das an der Außenseite der Seitenwandung 3 angeordnet ist. Dies ist in Fig. 4 dargestellt. Das Etikett 20 erstreckt sich insbesondere um die Seitenwandung 3 herum. Der Behälterkörper 2 und das Etikett 20 sind dadurch verbunden, dass bei der Herstellung des Behälterkörpers 2 das Etikett 20 in eine Spritzgussform eingelegt und daran anschließend der Kunststoff in die Spritzgussform eingespritzt wird. Das entsprechende Verfahren ist auch als In-Mould-Verfahren bzw. In-Mould-Labeling bekannt.

Figur 3 lässt weiterhin gut erkennen, dass der Behälterboden 4 und die Seitenwandung 3 als ein zusammenhängendes Spritzgussteil ausgebildet sind.

Figur 4 zeigt in einem vergrößerten Ausschnitt die Ausgestaltung des Behälterbodens 4. Hier ist gut zu erkennen, dass der Behälterboden 4 einen ersten Abschnitt 7 aufweist, der auf der Innenseite 8 konkav und auf der Außenseite 9 konkav ausgebildet ist.

Der Behälterboden 4 weist darüber hinaus einen zweiten Abschnitt 10 auf, der sich an den ersten Abschnitt 7 anschließt. Der zweite Abschnitt 10 ist auf der Innenseite 8 des Behälterbodens 4 konkav und auf der Außenseite 9 konvex ausgebildet. Dabei ist der zweite Abschnitt 10 in radialer Richtung weiter außen als der erste Abschnitt 7 angeordnet und damit weiter von der Behälterlängsachse 6 entfernt.

Der Behälterboden 4 weist weiterhin einen mittleren Abschnitt 11 auf. Dieser schließt sich in radialer Richtung nach innen an den ersten Abschnitt 7 an. Der mittlere Abschnitt 11 ist senkrecht zu der Behälterlängsachse 6 angeordnet. Der mittlere Abschnitt 11 ist an der Innenseite 8 und an der Außenseite 9 von parallelen Flächen begrenzt. Der Behälterboden 4 weist weiterhin einen Verbindungsabschnitt 12 auf, der mit der Seitenwandung 3 verbunden ist. Der Verbindungsabschnitt 12 schließt sich an den zweiten Abschnitt 10 an.

Der erste Abschnitt 7 weist in etwa in seiner Mitte einen Bereich mit einer minimalen Wanddicke auf. Die minimale Wanddicke des ersten Abschnitts 7 beträgt dabei zwischen 20% und 80% der minimalen Wanddicke des zweiten Abschnitts 10.

Weiterhin beträgt die Wanddicke des Behälterbodens 4 in dem ersten Abschnitt 7 zwischen 20% und 70% der Wanddicke des mittleren Abschnitts 11.

Figur 4 lässt gut erkennen, dass der mittlere Abschnitt 11 von einer Unterseite des zweiten Abschnitts 10 gemessen in der Richtung der Behälterlängsachse 6 mit einem Abstand B beabstandet ist. Der Abstand B beträgt zwischen dem 1-Fachen und dem 4-Fachen der minimalen Wanddicke in dem Bereich des ersten Abschnitts 7.

Der erste Abschnitt 7, der den zweiten Abschnitt 10 mit dem mittleren Abschnitt 11 verbindet, ist in einer Richtung geneigt zur Behälterlängsachse 6 angeordnet.

Ein behälterbodenseitiges Ende 13 der Seitenwandung 3 ist von der Unterseite des Behälterbodens 4 um den Abstand A beabstandet. Der Abstand A liegt dabei zwischen 80% und 100% der Wanddicke der Seitenwandung 3.

Zwischen der Außenseite der Seitenwandung 3 und dem Verbindungsabschnitt 12 ist ein Absatz 14 ausgebildet. Hierzu weist die Seitenwandung 3 einen Außendurchmesser auf, der über einem maximalen Außendurchmesser des Verbindungsabschnitts 12 liegt.

Figur 4 lässt weiterhin erkennen, dass der Verbindungsabschnitt 12 sich in einer Richtung parallel zur Behälterlängsachse 6 erstreckt. Auf diese Weise ist der Behälterboden 4 von unten an die Seitenwandung 3 angeschlossen.

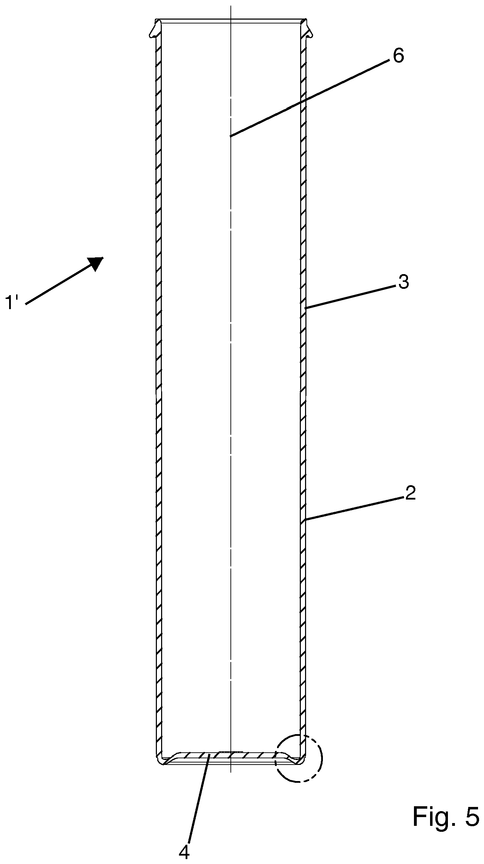

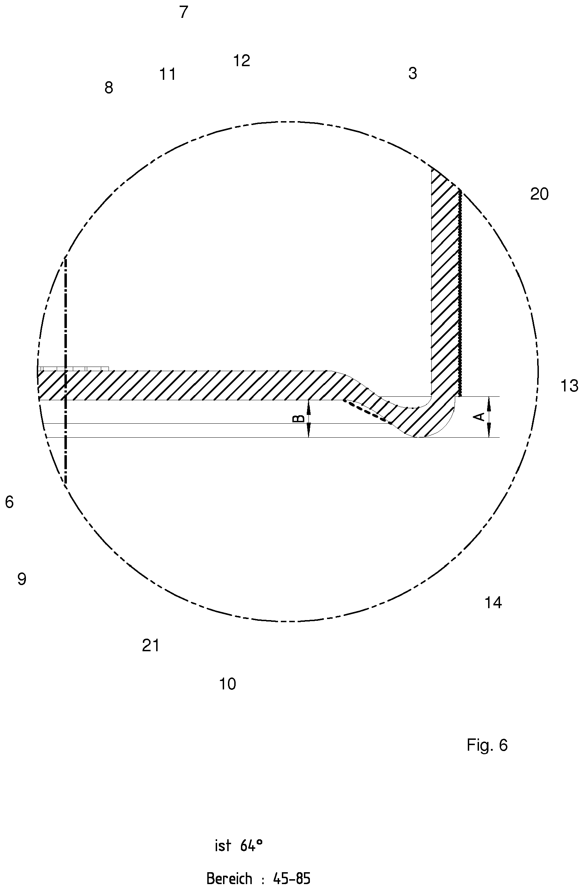

Die Figuren 5 und 6 zeigen eine weitere Ausführungsform eines Behälters 1'. Diese weist wiederum einen rohrförmigen Behälterkörper 2 auf, der weitgehende Übereinstimmungen mit der in den Figuren 1 bis 4 dargestellten Ausführungsform aufweist. Zur Vermeidung von Wiederholungen werden dabei entsprechende Teile mit denselben Bezugszeichen versehen. Die Beschreibung zu den Figuren 1 bis 4 gilt für die Figuren 5 bis 6 entsprechend, soweit Übereinstimmungen bestehen.

Figur 6 lässt insbesondere erkennen, dass die Seitenwandung 3 über ihre gesamte Höhe Innen- und Außenflächen aufweist, die parallel zueinander ausgebildet sind. Insbesondere ist in Figur 6 gut zu erkennen, dass der Verbindungsabschnitt 12 nur von unten an die Seitenwandung 3 herangeführt und mit dieser verbunden ist.

Figur 6 zeigt weiterhin, dass der erste Abschnitt auf der Innenseite 8 eine erste konkave Kontur und auf der Außenseite 9 eine zweite konkave Kontur aufweist. Weiterhin ist gestrichelt eine gedachte Verbindungslinie 21 zwischen den beiden Endpunkten der zweiten konkaven Kontur eingetragen. Die Endpunkte der zweiten konkaven Kontur sind die Punkte, an denen die zweite konkave Kontur in eine konvexe Kontur übergeht. Dabei beträgt ein Winkel, den die gedachte gerade Verbindungslinie 21 zu der Behälterlängsachse 6 einnimmt, zwischen 45° und 85°. Im dargestellten Ausführungsbeispiel beträgt der vorgenannte Winkel 64°.

Bei der Herstellung der in den Figuren 1 bis 6 beschriebenen Behälter 1, 1' wird in eine Spritzgussform zunächst das Etikett 20 eingelegt. Daran anschließend wird der geschmolzene Kunststoff in die Spritzgussform eingespritzt. Hierbei wird der auf diese Weise hergestellte Behälterkörper 2 mit dem Etikett 20 dauerhaft verbunden. Nachdem das Kunststoffmaterial abgekühlt wurde und erstarrt ist, kann der Behälterkörper 2 mit dem Etikett 20 aus der Spritzgussform entnommen werden.

## Patentansprüche

1. Behälter mit einem Behälterkörper (2) aus Kunststoff, wobei der Behälterkörper (2) eine Seitenwandung (3) und einen Behälterboden (4) aufweist, wobei der Behälterboden (4) eine Innenseite (8) und eine Außenseite (9) aufweist, wobei der Behälterkörper (2) im Bereich der Seitenwandung (3) mit einem Etikett (20) versehen ist, wobei der Behälterkörper (2) ein Spritzgussteil aus Kunststoff ist, das unter Verwendung einer Spritzgussform hergestellt ist, wobei der Behälterkörper (2) und das Etikett (20) dadurch verbunden sind, dass bei der Herstellung des Behälterkörpers (2) das Etikett (20) in die Spritzgussform eingelegt und daran anschließend der Kunststoff in die Spritzgussform eingespritzt sind, wobei der Behälterboden (4) einen ersten Abschnitt (7) aufweist, der auf der Innenseite (8) konkav und auf der Außenseite (9) konkav ist, wobei der Behälterboden einen zweiten Abschnitt (10) aufweist, der auf der Innenseite (8) konkav und auf der Außenseite (9) konvex ist und wobei der zweite Abschnitt (10) in radialer Richtung weiter außen als der erste Abschnitt (7) angeordnet ist.

2. Behälter nach Anspruch 1, **dadurch gekennzeichnet, dass** eine minimale Wanddicke des ersten Abschnitts (7) zwischen 20% und 80% einer minimalen Wanddicke des zweiten Abschnitts (10) beträgt.

3. Behälter nach Anspruch 1 oder 2, **dadurch gekennzeichnet, dass** der Behälterboden (4) einen Verbindungsabschnitt (12) aufweist, der mit der Seitenwandung (3) verbunden ist.

4. Behälter nach einem der Ansprüche 1 bis 3, **dadurch gekennzeichnet, dass** ein behälterbodenseitiges Ende (13) der Seitenwandung (3) von einer Unterseite des Behälterbodens (4) um den Abstand A beabstandet ist.

5. Behälter nach einem der Ansprüche 1 bis 4, **dadurch gekennzeichnet, dass** sich an den ersten Abschnitt (7) in radialer Richtung nach innen ein mittlerer Abschnitt (11) des Behälterbodens (4) anschließt.

6. Behälter nach Anspruch 5, **dadurch gekennzeichnet, dass** eine minimale Wanddicke des Behälterbodens (4) in dem ersten Abschnitt (7) zwischen 20% und 70% einer minimalen Wanddicke des mittleren Abschnitts (11) ist.

7. Behälter nach Anspruch 5 oder 6, **dadurch gekennzeichnet, dass** eine Außenseite (9) des mittleren Abschnitts (11) von einer Unterseite des Behälterbodens (4) mit einem Abstand B beabstandet ist.

8. Behälter nach Anspruch 7, **dadurch gekennzeichnet, dass** der Abstand B zwischen dem 1-Fachen und dem 4-Fachen der minimalen Wanddicke in dem Bereich des ersten Abschnitts (7) ist.

9. Behälter nach einem der Ansprüche 1 bis 8, **dadurch gekennzeichnet, dass** ein Absatz (14) zwischen der Außenseite der Seitenwandung (3) und dem Verbindungsabschnitt (12) ausgebildet ist, wobei die Seitenwandung (3) einen Außendurchmesser aufweist, der über einem maximalen Außendurchmesser des Verbindungsabschnittes (12) liegt.

10. Verfahren zur Herstellung eines Behälters (1, 1') mit einem Behälterkörper (2) aus Kunststoff, wobei der Behälterkörper (2) eine Seitenwandung (3) und einen Behälterboden (4) aufweist, wobei der Behälterboden (4) eine Innenseite (8) und eine Außenseite (9) aufweist, wobei der Behälterkörper (2) im Bereich der Seitenwandung (3) mit einem Etikett (20) versehen wird, wobei der Behälterkörper (2) ein Spritzgussteil aus Kunststoff ist, das unter Verwendung einer Spritzgussform hergestellt wird, wobei der Behälterkörper (2) und das Etikett dadurch verbunden werden, dass bei der Herstellung des Behälterkörpers (2) das Etikett in die Spritzgussform eingelegt und daran anschließend der Kunststoff in die Spritzgussform eingespritzt wird, wobei der Behälterboden einen ersten Abschnitt (7) aufweist, der auf der Innenseite (8) konkav und auf der Außenseite (9) konkav ist, wobei der Behälterboden einen zweiten Abschnitt (10) aufweist, der auf der Innenseite (8) konkav und auf der Außenseite (9) konvex ist und wobei der zweite Abschnitt (10) in radialer Richtung weiter außen als der erste Abschnitt (7) angeordnet ist.

## Claims

1. Container comprising a plastics material container body (2), the container body (2) having a side wall (3) and a container base (4), the container base (4) having an inner face (8) and an outer face (9), the container body (2) being provided with a label (20) in the region of the side wall (3), the container body (2) being a plastics material injection-moulded part which is produced using an injection mould, the container body (2) and the label (20) being connected in that, during the production of the container body (2), the label (20) is laid in the injection mould and subsequently the plastics material is injected into the injection mould, the container base (4) having a first portion (7) which is concave on the inner face (8) and concave on the outer face (9), the container base having a second portion (10) which is concave on the inner face (8) and convex on the outer face (9), and the second portion (10) being arranged further outward than the first portion (7) in a radial direction.

2. Container according to claim 1, **characterised in that** a minimum wall thickness of the first portion (7) is between 20 % and 80 % of a minimum wall thickness of the second portion (10).

3. Container according to either claim 1 or claim 2, **characterised in that** the container base (4) has a connecting portion (12) which is connected to the side wall (3).

4. Container according to any of claims 1 to 3, **characterised in that** an end (13) of the side wall (3) on the container base side is spaced apart from a lower face of the container base (4) by the distance A.

5. Container according to any of claims 1 to 4, **characterised in that** a central portion (11) of the container base (4) is attached, radially inwards, to the first portion (7).

6. Container according to claim 5, **characterised in that** a minimum wall thickness of the container base (4) in the first portion (7) is between 20 % and 70 % of a minimum wall thickness of the central portion (11).

7. Container according to either claim 5 or claim 6, **characterised in that** an outer face (9) of the central portion (11) is spaced apart from a lower face of the container base (4) by a distance B.

8. Container according to claim 7, **characterised in that** the distance B is between 1 times and 4 times the minimum wall thickness in the region of the first portion (7).

9. Container according to any of claims 1 to 8, **characterised in that** a shoulder (14) is formed between the outer face of the side wall (3) and the connecting portion (12), the side wall (3) having an external diameter which is greater than a maximum external diameter of the connecting portion (12).

10. Method for producing a container (1, 1') comprising a plastics material container body (2), the container body (2) having a side wall (3) and a container base (4), the container base (4) having an inner face (8) and an outer face (9), the container body (2) being provided with a label (20) in the region of the side wall (3), the container body (2) being a plastics material injection-moulded part which is produced using an injection mould, the container body (2) and the label being connected in that, during the production of the container body (2), the label is laid in the injection mould and subsequently the plastics material is injected into the injection mould, the container base having a first portion (7) which is concave on the inner face (8) and concave on the outer face (9), the container base having a second portion (10) which is concave on the inner face (8) and convex on the outer face (9), and the second portion (10) being arranged further outward than the first portion (7) in a radial direction.

## Revendications

1. Récipient doté d'un corps de récipient (2) en plastique, le corps de récipient (2) comportant une paroi latérale (3) et un fond de récipient (4), le fond de récipient (4) comportant une face interne (8) et une face externe (9), le corps de récipient (2) étant prévu avec une étiquette (20) dans la zone de la paroi latérale (3), le corps de récipient (2) étant une pièce en plastique moulée par injection, laquelle est fabriquée en utilisant un moule d'injection, le corps de récipient (2) et l'étiquette (20) étant raccordés de telle façon que lors de la fabrication du corps de récipient (2), l'étiquette (20) est déposée dans le moule d'injection et le plastique est ensuite injecté dans le moule d'injection, le fond de récipient (4) comportant une première section (7), laquelle est concave sur la face interne (8) et concave sur la face externe (9), le fond de récipient (4) comportant une deuxième section (10), laquelle est concave sur la face interne (8) et convexe sur la face externe (9) et la deuxième section (10) étant agencée plus à l'extérieur que la première section (7) dans la direction radiale.

2. Récipient selon la revendication 1, **caractérisé en ce qu'**une épaisseur de paroi minimale de la première section (7) vaut entre 20 % et 80 % d'une épaisseur de paroi minimale de la deuxième section (10).

3. Récipient selon la revendication 1 ou 2, **caractérisé en ce que** le fond de récipient (4) comporte une partie de jonction (12), laquelle est raccordée à la paroi latérale (3).

4. Récipient selon l'une des revendications 1 à 3, **caractérisé en ce qu'**une extrémité (13) de la paroi latérale (3) du côté du fond du récipient est écartée de la distance A de la face inférieure du fond de récipient (4).

5. Récipient selon l'une des revendications 1 à 4, **caractérisé en ce qu'**une section médiane (11) du fond de récipient (4) se rattache à la première section (7) vers l'intérieur dans la direction radiale.

6. Récipient selon la revendication 5, **caractérisé en ce qu'**une épaisseur de paroi minimale du fond de récipient (4) dans la première section (7) vaut entre 20 % et 70 % d'une épaisseur de paroi minimale de la section médiane (11).

7. Récipient selon la revendication 5 ou 6, **caractérisé en ce qu'**une face externe (9) de la section médiane (11) est écartée d'une distance B d'une face inférieure du fond de récipient (4).

8. Récipient selon la revendication 7, **caractérisé en ce que** la distance B vaut entre 1 fois et 4 fois l'épaisseur de paroi minimale dans la zone de la première section (7).

9. Récipient selon l'une des revendications 1 à 8, **caractérisé en ce qu'**un épaulement (14) est réalisé entre la face externe de la paroi latérale (3) et la partie de jonction (12), la paroi latérale (3) possédant un diamètre extérieur supérieur à un diamètre extérieur maximal de la partie de jonction (12).

10. Procédé de fabrication d'un récipient (1, 1') doté d'un corps de récipient (2) en plastique, le corps de récipient (2) comportant une paroi latérale (3) et un fond de récipient (4), le fond de récipient (4) comportant une face interne (8) et une face externe (9), le corps de récipient (2) étant prévu avec une étiquette (20) dans la zone de la paroi latérale (3), le corps de récipient (2) étant une pièce en plastique moulée par injection, laquelle est fabriquée en utilisant un moule d'injection, le corps de récipient (2) et l'étiquette étant raccordés de telle façon que lors de la fabrication du corps de récipient (2) l'étiquette est déposée dans le moule d'injection et le plastique est ensuite injecté dans le moule d'injection, le fond de récipient comportant une première section (7), laquelle est concave sur la face interne (8) et concave sur la face externe (9), le fond de récipient (4) comportant une deuxième section (10), laquelle est concave sur la face interne (8) et convexe sur la face externe (9) et la deuxième section (10) étant agencée plus à l'extérieur que la première section (7) dans la direction radiale.
